# EUROPEAN PATENT SPECIFICATION

(11) **EP 1 613 506 B1**
(45) Date of publication and mention of the grant of the patent: **02.07.2008**
(21) Application number: 04727920.3
(22) Date of filing: 16.04.2004
(51) Int. Cl.: B60P 1/64

(54) **AUXILIARY TRANSFER DEVICE FOR SEA CONTAINERS**
HILFSTRANSFERVORRICHTUNG FÜR SEECONTAINER
DISPOSITIF DE TRANSFERT AUXILIAIRE POUR CONTENEURS MARITIMES

(30) Priority: 17.04.2003 FI 20030160 U
(43) Date of publication of application: 11.01.2006
(73) Proprietor: Liukkonen, Timo Johannes, 04390 Jäniksenlinna (FI)
(72) Inventor: Liukkonen, Timo Johannes, 04390 Jäniksenlinna (FI)
(74) Representative: Eriksson, Svante Johan Christer
(86) International application number: PCT/FI2004/000234
(87) International publication number: WO 2004/091969

(56) References cited:
- WO-A1-01/70599
- DE-A1- 3 329 677
- DE-U1- 20 302 848
- FR-A- 2 263 905
- JP-A- 61 081 830
- US-A- 3 206 053
- US-A- 3 467 268
- US-A- 4 915 567

## Description

The present invention relates to an auxiliary transfer device for sea containers, which auxiliary device is mountable on a transport unit, particularly on a motor vehicle and a trailer of a full trailer combination, for transferring sea containers from the transport unit onto the ground, and conversely.

DE 33 29 677 A1 discloses an auxiliary transfer device according to the preamble of claim 1.

Drawbacks in conjuction with loading and unloading operations of sea containers have been observed in the freight traffic of sea containers. In transporting, for example, three sea containers by a full trailer combination at the same time, there are no problems with unloading the first and the third container, but all transport companies have difficulties to transfer and to unload the middle container.

It is an object of this invention to eliminate the above-mentioned problem in a simple and cost effective way by utilizing existing locking points at the sea containers. This is achieved by an auxiliary transfer device according to claim 1.

A hydraulic tilting device is arranged between the chassis of the transport unit and the main frame of the auxiliary transfer device, by means of which the angle position of the main frame of the auxiliary transfer device can be adjusted during unloading and loading a sea container from the transport unit and onto the transport unit, respectively.

The movement of the main section of the auxiliary transfer device back and forth is provided by means of a cable wire system or a corresponding transfer mechanism mounted onto said main frame, for transferring the sea container forward along the main frame of the auxiliary transfer device during loading and backwards during unloading the sea container.

For carrying out the movement of the lifting frame along the support frame, a second hydraulic device is connected between these both frames, by means of which the lifting frame is movable from its upper position, in which the locking devices of the lifting frame are situated at a level of the locking points at the end sides of the sea container disposed on the main frame, to its lower position, in which said locking devices are situated at a level of the corresponding locking devices of the sea container disposed on the ground, and conversely.

The support frame and the lifting frame are preferably equal in height, and this height is at least twice the height of the main frame from the ground in its basic position to ensure sufficient stability of the auxiliary transfer device.

The locking devices of the auxiliary transfer device are preferably hingeably attached to the lifting frame to allow flexibility during lifting and lowering of the sea container.

By means of this auxiliary transfer device, significant savings can be achieved in transport costs. Using one full trailer combination, which is provided with one or two auxilariary transfer devices of this kind, it is possible to make the work of even three transport lorries. After a sea container has been discharged from the transport unit by means of the auxiliary transfer device, a new sea container can be loaded by the auxiliary transfer device without outside help resulting in savings both in transport and lifting costs.

In the following the invention is described in more detail referring the accompanying drawings in which
Fig. 1 shows schematically a side view of an auxiliary transfer device in its receiving or delivering position.

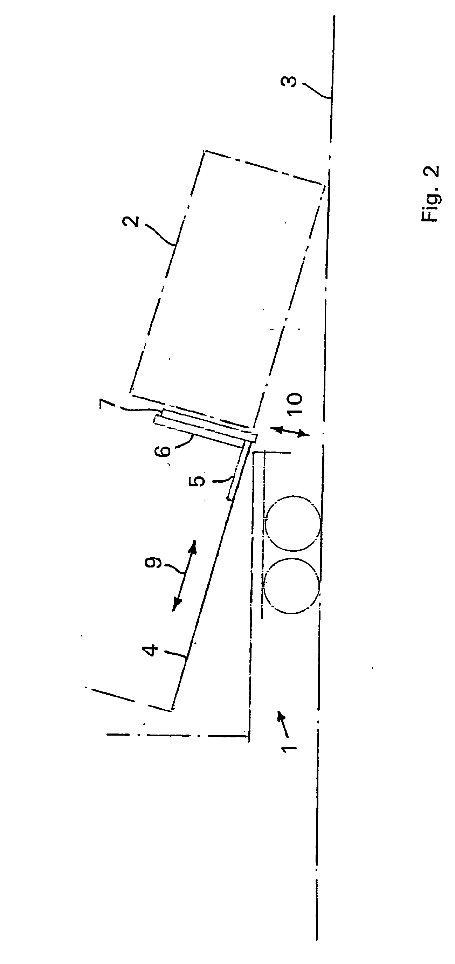

Fig. 2 shows schematically a side view of the auxiliary transfer device in a middle stage of unloading or loading operations of a sea container.
Fig. 3 shows a top view of the auxiliary transfer device of Fig. 1.

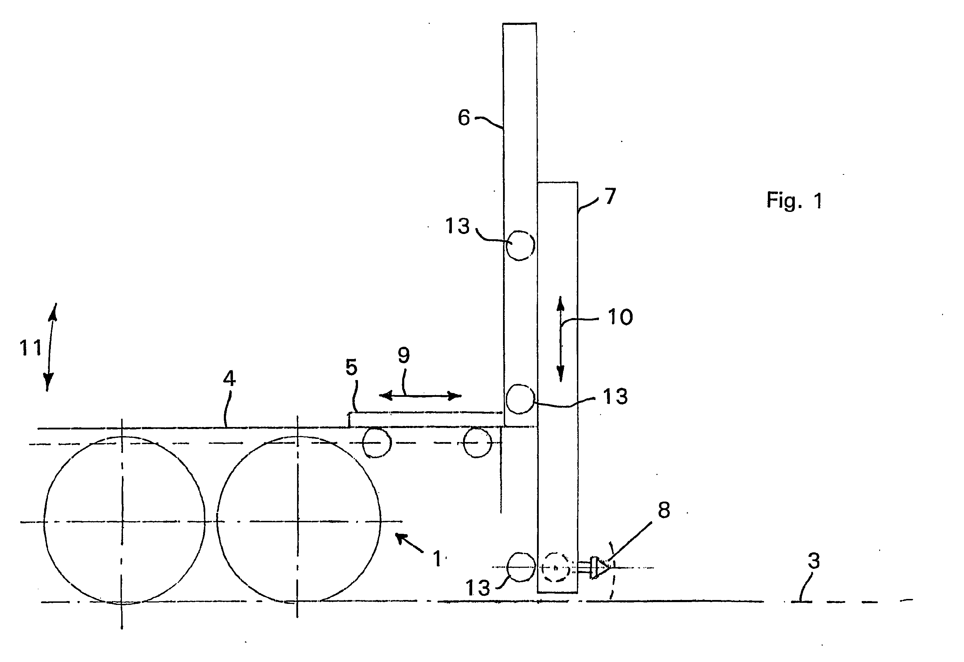

An auxiliary transfer device for sea acontainers 2 shown in the drawings comprises a tiltable main frame 4 mounted on the chassis of a transport unit 1, along which main frame 4 the main section 5 of the auxiliarly transfer device is movable back and forth as shown by arrow 9. A support frame 6 is stationary fixed to the rear end of this main section 5 to extend perpendicularly upwards from the level of the main frame 4. A lifting frame 7 is attached to the support frame 6, slidably in the height direction as shown by a double arrow 10, whereby to the bottom end of said lifting frame 7, two adjacent and backwardly extending locking devices 8 are mounted to fit into and to be locked in the locking points at the front or rear end of the sea container. The lifting frame 7 is in its basic position as a whole situated above the level of the main frame 4 and lowerable to its lower position shown in Fig. 1, in which both locking devices thereof are situated at the level of the locking points of the sea container 2 disposed on the ground 3, whereby the bottom end of the lifting frame 7 is situated slightly above the ground to allow the transport unit 1 to be backed towards the end of the sea container 2 so that the locking devices 8 enter the locking points at the end of the sea container 2 and are locked therein.

The locking devices 8 are preferably hingeably arranged to allow flexibility during lifting lowering the sea container 2.

The main frame 4 of the auxiliary transfer device is preferably tiltable by means of a hydraulic tilting device as shown by arrow 11 in Fig. 1 so that the main frame 5, at the moment when the end of sea container 2, fixed to the lifting frame 7, has been lifted up to the level of the main frame 4, is adjustable to align with the angle of inclination of the sea container 2. Thereafter, the main section 5 of the auxiliary transfer device is moved towards the front end of the main frame 4 simultaneously drawing the sea container 2 with it, whereby the main frame 4 will be adapted to the change of the angle of inclination of the sea container by means of the tilting device, until the centre of gravity of the sea container has entirely been brought onto the main frame, and the sea container rests with its whole weigth on the main frame 4. The main frame is then lowered to its basic position, whereby the sea container is in its transport position.

According to one embodiment, the movement of the main section 5 back and forth along the main frame 4 is achievable by a cable wire system known from interchangeable containers, but also other transfer mechanisms are possible.

When the sea container 2 is to be removed from the transport unit, the cable wire system of the main section 5 is firstly activated so that the main section 5, together with the support frame 6 and the lifting frame 7, is moved backwards pushing simultaneously the sea container 2 backwards. The tilting device of the main frame 4 is activated so that the main frame will take an appropriate angle of inclination, in which the sea container 2 is further pushed backwards until its rear end will reach the ground 3. Thereafter the transport unit 1 is transferred forward, while the main section 5 is moved backwards, and simultaneously the main frame 4 is lowered to align with the angle position of the sea container. When the main section 5 has reached its rear end position, the hydraulic device of the lifting frame 7 is activated so that the front end of the sea container 2 is lowered onto the ground 3, and simultaneously the main frame 4 is lowered down. When the sea container has been lowered onto the ground 3, the locking devices 8 are detached in a known manner, and the transport unit 1 can be driven away, and the auxiliary transfer device can be set back to its basic position.

In a full trailer combination, it is sufficient when the tractor vehicle is provided with an auxiliary transfer device according to the invention. When the container 2 has been removed from the tractor vehicle by means of the auxiliary transfer device, the tractor vehicle is backed to the front of or behind a full trailer, the main section 5 of the auxiliary transfer device having been transferred to its rearmost position so that the locking devices 8 of the auxiliary transfer device align with and become locked in the locking points at the end of the container disposed at the respective end of the trailer, whereafter the main section 5 of the auxiliary transfer device is transferred towards its foremost end position drawing simultaneously the container fixed thereto with it, whereby the container is moved onto the tractor vehicle. Unloading of the container 2 from the tractor vehicle occurs in the above described manner, whereafter the tractor vehicle is ready to be transferred to the other end of the trailer for unloading a container positioned at said end acting in the same way as in conjunction with the preceding container. The loading of the sea containers to the full trailer combination is carried out in a reverse order. Thereby the container 2 is lifted onto the tractor vehicle by the auxiliary transfer device, wherefrom it can be transferred onto the full trailer after the tractor vehicle has been backed in front of one end of the full trailer, whereby the main section 5 of the auxiliary transfer device is transferred to its rearmost end position so that the container is pushed forward onto the full trailer. Thereafter the next container is lifted onto the driving vehicle by means of the auxiliary transfer device and pushed onto the full trailer from its opposite end. Finally, a third container is raised onto the tractor vehicle by means of the auxiliarly transfer device, whereafter the full trailer is connected to the tractor vehicle, and the whole transport combination is ready to be driven to next destination.

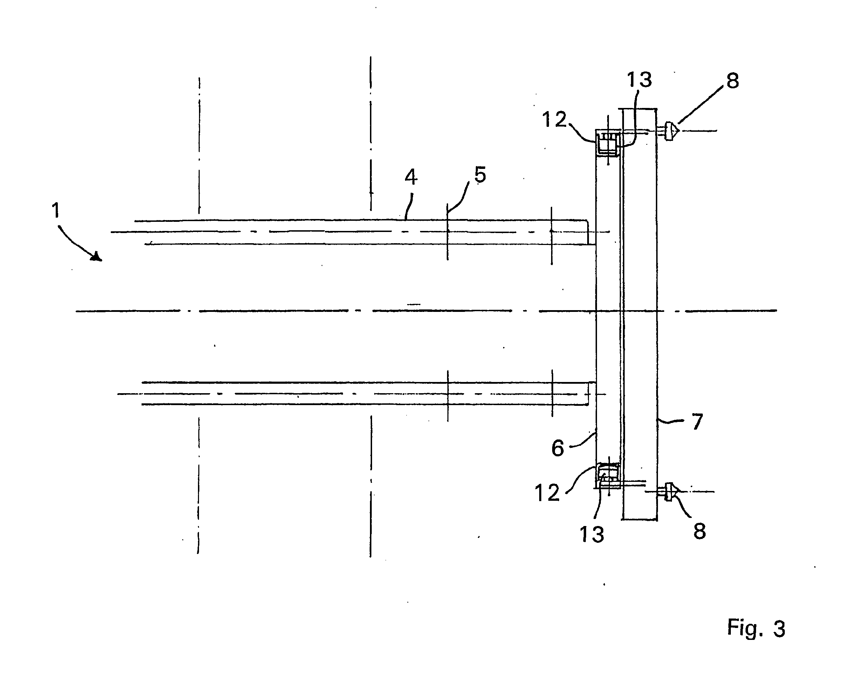

The movement of lifting frame 7 along the support frame 6 is preferably produced by means of a second hydraulic device connected between these frames. The support frame 6 and the lifting frame 7 may be of the same height, this height being preferably at least twice the height of the main frame 4 from the ground 3 in its basic position. To control the movement of the lifting frame 7, guide bars 12 having a U-shaped cross section are provided at the side edges of the support frame 6, to which guide rollers 13 fixed to the lifting frame 7 are arranged as can be seen from Fig. 3. The lifting frame comprises preferably three pairs of guide rollers 13, from which one pair is situated approximately at the level of the middle of the lifting frame, and the other pairs at its upper and lower ends, respectively, as can be seen from Fig. 1. This solution ensures that at least two pairs of the guide rollers 13 provide for controlling the movement of the lifting frame 7 in all positions thereof.

## Claims

1. An auxiliary transfer device for sea containers (2), which auxiliary transfer device is mountable on a transport unit (1), particularly on a motor vehicle and a trailer of a full trailer combination, for transferring the sea containers (2) from the transport unit onto the ground (3), and conversely, the auxiliary transfer device comprising a tiltable main frame (4) mountable on the chassis of the transport unit (1), and a main section (5), movable back and forth along the main frame, a support frame (6) and a lifting device (7) movable down- and upwards along the support frame, whereby the bottom end of the lifting device is provided with two adjacent, backwardly extending locking devices (8) arranged to fit into and to be locked in the locking points at the front or rear end of the sea container (2), **characterized in that** the support frame (6) is stationary fixed to rear end of the main section such that it extends perpendicularly upwards from the level of the main frame (4), and that the lifting device is a lifting frame (7).

2. The auxiliary transfer device according to claim 1, **characterized in that** a hydraulic tilting device is arranged to be connected between the chassis of the transport unit (1) and the main frame (4) of the auxiliary transfer device.

3. The auxiliary transfer device according to claim 1, **characterized in that** a cable wire system is mounted onto the main frame (4) of the auxiliary transfer device for moving the main section (5) back and forth.

4. The auxiliary transfer device according to claim 2, **characterized in that** a second hydraulic device is provided between the support frame (6) and the lifting frame (7) for moving the lifting frame (7).

5. The auxiliary transfer device according to claim 1, **characterized in that** the support frame (6) and the lifting frame (7) are of the same height, which height is at least twice the height of the main frame (4) from the ground (3) in its basic position.

6. The auxiliary transfer device according to claim 1, **characterized in that** the locking devices (8) are hingeably attached to the lifting frame (7).

## Patentansprüche

1. Hilfstransfervorriclitung für Seecontainer (2), welche Hilfstransfervorrichtung zum Umladen von Seecontainern (2) von einer Transporteinheit auf den Boden (3), und umgekehrt, auf eine Transporteinheit (1), besonders auf ein Kraftfahrzeug und einen Anhänger einer Vollanhänger-Koinbination montierbar ist, wobei die Hilfstransfervorrichtung einen auf das Fahrgestell der Transporteinheit (1) montierbaren kippbaren Hauptrahmen (4) und ein längs des Hauptrahmens hin und her bewegbares Hauptteil (5), einen Stützrahmen (6) und eine längs des Stützrahmens ab- und aufwärts bewegbare Hebevorrichtung (7) aufweist, wobei an dem unteren Ende der Hebevorrichtung zwei benachbarte, rückwärts gerichtete Verschlußvorrichtungen (8) zum Einhängen in die am vorderen oder hinteren Ende des Seecontainers (2) vorgesehenen Verschlussgegenstücke und zur Arretierung dort angeordnet ist, **dadurch gekennzeichnet, dass** der Stützrahmen (6) an dem hinteren Ende des Hauptteils feststehend so befestigt ist, dass er sich von der Ebene des Hauptrahmens (4) senkrecht nach oben erstreckt, und dass die Hebevorrichtung ein Heberahmen (7) ist.

2. Hilfstransfervorrichtung nach Anspruch 1, **dadurch gekennzeichnet, dass** eine hydraulische Kippvorrichtung zur Schaltung zwischen das Fahrgestell der Transporteinheit (1) und den Hauptrahmen (4) der Hilfstransfervorrichtung angeordnet ist.

3. Hilfstransfervorrichtung nach Anspruch 1, **dadurch gekennzeichnet, dass** auf den Hauptrahmen (4) der Hilfstransfervorrichtung ein Kabeldrahtsystem zum Hin- und Herbewegen des Hauptteils (5) angeordnet ist.

4. Hilfstransfervorrichtung nach Anspruch 2, **dadurch gekennzeichnet, dass** zwischen dem Stützrahmen (6) und des Heberahmens (7) eine zweite Hydraulikvorrichtung zum Bewegen des Heberahmens (7) angeordnet ist.

5. Hilfstransfervorrichtung nach Anspruch 1, **dadurch gekennzeichnet, dass** der Stützrahmen (6) und der Heberahmen (7) die gleiche Höhe haben, welche Höhe zweimal so groß ist wie die Höhe des Hauptrahmens (4) von der Erde (3) in seiner Grundposition.

6. Hilfstransfervorrichtung nach Anspruch 1, **dadurch gekennzeichnet, dass** die Verschlußvorrichtungen (8) an dem Heberahmen (7) schwenkbar befestigt sind.

## Revendications

1. Dispositif de transfert auxiliaire pour conteneurs maritimes (2), ce dispositif de transfert auxiliaire pouvant être monté sur une unité de transport (1), en particulier sur un véhicule à moteur et une remorque d'un véhicule combiné à remorque complet, pour transférer les conteneurs maritimes (2) de l'unité de transport sur le sol (3) et inversement, le dispositif de transfert auxiliaire comprenant un cadre principal inclinable (4) qui peut être monté sur le châssis de l'unité de transport (1), et une section principale (5) déplaçable en va-et-vient le long du cadre principal, un cadre de support (6) et un dispositif de levage (7) déplaçable vers le bas et le haut le long du cadre de support, dans lequel l'extrémité inférieure du dispositif de levage comporte deux dispositifs de verrouillage adjacents s'étendant vers l'arrière (8) prévus pour se loger et être verrouillés dans les points de verrouillage à l'extrémité avant ou arrière du conteneur maritime (2), **caractérisé en ce que** le cadre de support (6) est attaché de façon fixe à l'extrémité arrière de la section principale de sorte qu'il s'étende perpendiculairement vers le haut à partir du niveau du cadre principal (4), et **en ce que** le dispositif de levage est un cadre de levage (7).

2. Dispositif de transfert auxiliaire selon la revendication 1, **caractérisé en ce qu'**un dispositif hydraulique d'inclinaison est agencé de manière à être connecté entre le châssis de l'unité de transport (1) et le cadre principal (4) du dispositif de transfert auxiliaire.

3. Dispositif de transfert auxiliaire selon la revendication 1, **caractérisé en ce qu'**un système de câbles est monté sur le cadre principal (4) du dispositif de transfert auxiliaire pour déplacer la section principale (5) dans la direction avant - arrière.

4. Dispositif de transfert auxiliaire selon la revendication 2, **caractérisé en ce qu'**un deuxième dispositif hydraulique est prévu entre le cadre de support (6) et le cadre de levage (7) pour déplacer le cadre de levage (7).

5. Dispositif de transfert auxiliaire selon la revendication 1, **caractérisé en ce que** le cadre de support (6) et le cadre de levage (7) sont de la même hauteur, cette hauteur étant au moins le double de la hauteur du cadre principal (4) par rapport au sol (3) dans sa position de base.

6. Dispositif de transfert auxiliaire selon la revendication 1, **caractérisé en ce que** les dispositifs de verrouillage (8) sont attachés de façon articulée au cadre de levage (7).
